Europäisches Patentamt

(19) European Patent Office

Office européen des brevets

(11) Publication number: **0 298 942**

**A1**

## (12) EUROPEAN PATENT APPLICATION

(21) Application number: **88850237.4**

(22) Date of filing: **29.06.88**

(51) Int. Cl.⁴: **A 01 G 13/02**
**C 08 J 5/18**

(30) Priority: **09.07.87 SE 8702819**

(43) Date of publication of application:
**11.01.89 Bulletin 89/02**

(84) Designated Contracting States: **DE ES FR GB NL**

(71) Applicant: **Teno AB**
**Box 297**
**S-601 04 Norrköping (SE)**

(72) Inventor: **Carlsson, Lissela**
**Anestadsgatan 97**
**S-603 70 Norrköping (SE)**

**Eriksson, Rolf**
**Ekakern**
**S-610 24 Vikbolandet (SE)**

(74) Representative: **Onn, Thorsten et al**
**AB STOCKHOLMS PATENTBYRA Box 3129**
**S-103 62 Stockholm (SE)**

(54) **Plastic foil.**

(57) The invention relates to a foil (1,3,6,9) of a plastic material to be used in agriculture and horticulture for protection of growing plants. According to the invention the foil is more easily degradable through the influence of light and/or weather in discrete areas (2,4,7,10) than over the rest of its surface. Therefore holes will occur in the foil after some time, enabling an increased ventilation therethrough.

FIG.6

EP 0 298 942 A1

**Description**

## PLASTIC FOIL

This invention relates to plastic foil or film having a determined degradability. More spcifically, the invention concerns a plastic foil or film which is more easily degradable in discrete areas of its surface than over the rest of its surface. Such a foil or film is particularly suitable for use in the cultivation of plants.

Foils of films of plastic material have been widely used when growing and cultivating plants in agriculture and horticulture. The clear foil or film is used for covering crops, usually at the sowing or planting, in order to give the crops a more favourable climate. Moreover, the foil or film can be applied over carrier racks of different designs and forms in this way a construction more or less similar to a greenhouse which protects the plants against cold and unsuitable weather. Such a construction can be as simply designed as a shelter formed as a half-cylinder which is supported by semi-circular supporting arcs or it can be bigger and more intricate and resemble a conventional greenhouse.

The plastic foil or film is substantially air-tight and does not admit fresh air to the plants. In the early stages of the plants this is also not necessary, and often not even desirable, but in later stages the need of ventilation makes itself more and more felt. At the same time, however, it is desired to maintain the protection given by the foil as much as possible.

It would be desirable to have access to a foil or film of plastic material for agricultural and horticultural purposes which is completely air-tight in the early stages of the plants but in the later stages has openings for ventilation in a regulated manner according to desire. However, to make holes in the foil mechanically at a suitable time requires much work and personnel and is not economically realistic in large cultures.

The desired objects are now accomplished by the present invention. According to the invention there is provided a foil or a film of a plastic material which is more easily degradable in discrete areas of its surface, e.g. by the influence of light, weather and/or microorganisms, than over the rest of its surface.

Thus, in this way the desired object is achieved in that the foil or film when being applied does not let through any air. During the growth of the plants, however, the foil or film will be exposed to the influence of light, especially sunlight, and weather. The foil or film will then be degraded more quickly in the discrete areas than in the other areas and after a suitable time holes have been created in these areas so that a ventilation will be possible.

It has been well-known for a long time that plastic materials of various types can be degraded by the influence of light and weather. Degradation through microorganisms is also known. Different types of plastic materials are differently sensitive to this. Usually it is desired to prevent this degradation as much as possible and many different additives are known for this. However, in many cases it is desired that the plastic material should be degraded more quickly, e.g. when discarded packing materials for environmental reasons should not litter nature for a long time. Also for this purpose several agents are known having a more or less strong effect.

Usually sunlight has the strongest degrading effect on plastic materials, and materials promoting this effect are usually referred to as photoinitiators or photosensitizers. The photoinitiators are excited by light energy and decompose to give free radicals which initiate the degradation of the polymer molecules. The photosensitizers are excited and thereafter transmit the absorbed energy to the polymer molecules. However, the borderline between these two modes of action is not sharp and initiation and sensitizing can occur at the same time with certain agents. Degradation of polyolefins which are the plastic materials most used in this field is described more closely in Norman S Allen: "Degradation and Stabilisation of Polyolefins", Applied Science Publishers, London and New York 1983, where also a great number of examples of substances promoting the degradation are shown. Degradation by the influence of light and weather is also described in the literature for other types of plastic materials.

The easier degradability within discrete areas of the foil or film can be achieved in different ways. It is not always necessary here to use any agent promoting the degradation but it can sometimes be sufficient that the foil or film in the discrete areas is made thinner than otherwise. The plastic material is susceptible to degradation also without additives and if the foil or film is thinner and/or more exposed to sunlight and/or is under mechanical stress in certain areas, the degradation in these areas will first have gone so far that holes occur.

A plastic material degradable per se can also be laminated together with another foil or film which is provided with holes in the discrete areas. In this way the degradation will also be quickest in the exposed, discrete areas so that through-going holes will first occur here.

However, it is often desired to obtain an accelerated degradation by using one or more agents promoting degradation by the influence of light and/or weather. Such agents can then be uniformly incorporated in the foil or film or they can be arranged merely in the discrete areas where an easier degradability is desired.

In the first case with the uniformly distributed degradation-promoting agent it is intended to achieve an easier degradability in the discrete areas. This can be done in different ways. One method is, as indicated above, to make the foil or film thinner in the discrete areas so that degradation will be quicker here.

Another way is laminating the foil or film together with another foil or film which is provided with holes in the discrete areas. The other foil or film may also contain a degradation-promoting agent but usually does not. By the lamination the first foil will be exposed in the discrete areas and therefore the degradation will lead to through-going holes first occurring in these areas.

Another method is to provide the foil with a color coating which reduces the admission of light and consequently also the degradation rate, but which is not present in the discrete areas. Thus, the light-induced degradation will be more rapid in these areas. The color coating must be selected such that sufficient light will have access to the cultivated plants.

In the second case according to the above, where the agent promoting degradation is only arranged in the discrete areas, the agent can be included in a coating which can be painted or printed in a suitable pattern on the foil or film. Thus, the agent promoting degradation will therefore be in contact with the foil or film only in the discrete areas where a more rapid degradation is desired. In this case it is suitable that in use, the coating is applied to the surface of the foil or film which is facing away from the incident light. The coating can then also contain a light-absorbing agent or pigment with the effect that the foil or film absorbs more light in the discrete areas and the degradation is accelerated in this way. Printing of the foil or film in this way is a simple and inexpensive way of providing it with a pattern of discrete areas with an easier degradability.

Another way is to laminate the foil together with a second foil that will break up into a pattern of discrete areas upon stretching of the resulting laminate. At least the second foil will then contain one or more degradation-promoting agents so that the first foil in the discrete areas will be in intimate contact with such an agent in this way. Also here the surface to which the second foil or film has been laminated should in use be facing away from the incident light.

The invention is illustrated more in detail by the accompanying drawing wherein a number of embodiments are shown.

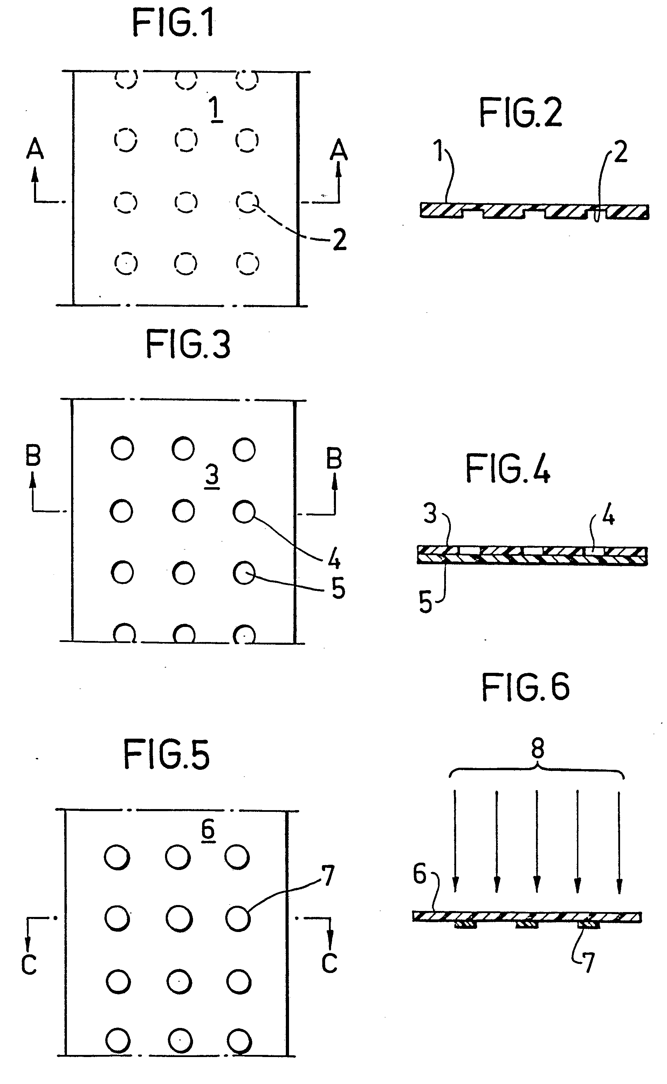

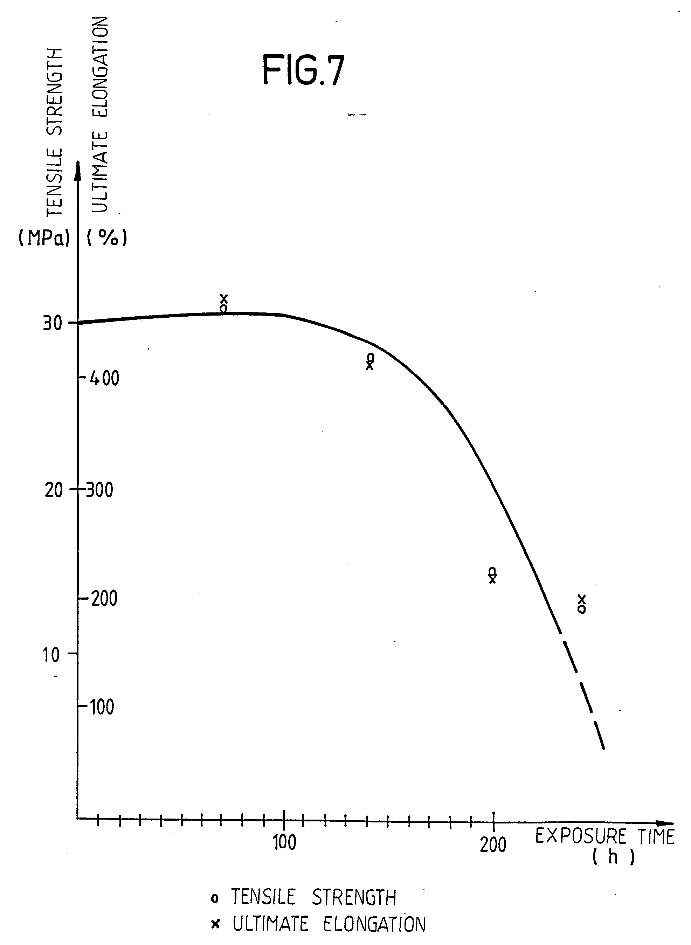

Fig.1 is a plan view of an embodiment of a foil according to the invention and Fig. 2 is a sectional view of the same foil. Fig. 3 shows another embodiment in a plan view and Fig. 4 a corresponding sectional view. Fig. 5 shows a plan view of an additional embodiment in the same way while Fig. 6 shows the corresponding sectional view. In the sectional views the thicknesses of foils and other layers are shown exaggerated for the sake of clearness. Fig. 7 shows a diagram of the degradation of a foil as a function of time.

In Fig. 1 a foil or film 1 of a plastic material is shown which is a section of a continuous web. The foil or film is provided with indentations 2 where it is thinner than in the other areas of the foil or film. This is also apparent from Fig. 2 which is a sectional view taken along the line A-A in Fig. 1. It is apparent here that the foil or film 1 is thinner in discrete areas 2. When the foil or film is exposed to a degrading influence by light and weather, the thinner areas 2 will first have been degraded so far that holes occur, while the rest of the foil or film is still relatively intact and, in any case, has not been degraded so far that holes have been formed.

The foil or film 1 can also contain one or more agents that promote the degradation of the plastic material so that it will be more rapid. However, this is not always necessary but the inherent susceptibility of the plastic material to degradation can be sufficient to achieve the desired effect within a desired time. By varying the type of plastic material and type and amount of possibly incorporated degradation-promoting agent one skilled in the art can easily set a suitable time for the desired degradation on the basis of simple routine tests.

In Fig. 3 an embodiment of the foil or film according to the invention is shown where it is composed of two laminated foils or films 3 and 5. One foil or film 3 is provided with holes 4 so that the second foil or film 5 is exposed in these discrete areas. Thus, in the exposed areas the foil or film 5 can be exposed more easily to the degrading influence of light and weather and holes will therefore occur first in these areas. The plastic material in the foil or film 5 can be sufficiently sensitive to degradation or it may contain one or more degradation-promoting agents.

Fig. 4 is a sectional view taken along the line B-B in Fig. 3. The first foil or film 3 with the holes 4 and laminated with the second foil or film 5 is shown here.

In a variant of the embodiment according to Figs. 3 and 4 a masking dye is incorporated in the first foil or film 3 which prevents light from reaching the lower foils and in this way prevents or delays its degradation. The foil or film 3 can also be replaced by a layer of a masking dye covering the whole lower foil or film 5 except the discrete areas where the degradation is to be facilitated. In this variant the colored layer is preferably facing the side from which light will enter. As the cultivated plants require light, the colored layers, however, should not be too impermeable to light but must be adjusted to a suitable color density.

Another embodiment of the foil or film of the invention is shown in Figs. 5 and 6. Here the foil or film 6 has been printed with an ink containing one or more degradation-promoting agents in a pattern of discrete areas 7. In this way the degradation-promoting agent will get into intimate contact with the foil or film only in these discrete areas. The foil or film 6 as such can optionally also contain degradation-promoting agents, but this is usually not necessary. In Fig. 6 a sectional view taken along the line C-C in Fig. 5 is shown. Here it is shown that the areas 7 of ink with a degradation-promoting agent are preferably arranged on the side of the foil or film 6 facing away from the incident light, as illustrated by the arrows 8. It may be suitable that the ink in the discrete areas 7 also contains a light-absorbing agent or pigment so that the foil or film being irradiated will absorb more light in these areas, so that the degradation is promoted in this way.

In a variant of this embodiment, the discrete areas 7 do not consist of a printed ink but of residues of a laminated second foil or film of plastic material which has been made to break up into discrete areas through stretching after lamination. In this case two foils or films are extruded or blown together through two adjacent extrusion nozzles and laminated together shortly thereafter to a laminate which is then stretched either through the blowing or mechanically. One of the laminated foils or films contains one or more degradation-promoting agents and consists of a plastic material which breaks up at the stretching forming discrete areas still adhering to the second foil or film. An arrangement will be obtained here which in principle resembles that in Figs. 5 and 6, the discrete areas, however, not being present in a regular pattern. Also in this case the breaking plastic material can contain a light-absorbing agent or pigment.

It is appreciated that the patterns of discrete areas with an increased degradability shown in the various drawing figures are only non-limiting examples and that other arrangements of such areas are equally possible according to the decision of one skilled in the art. The size of the discrete areas can also be selected by one skilled in the art as desired considering that a sufficient ventilation should be obtained simultaneously as the remaining foil or film should exhibit a sufficient strength.

In many cases it may be suitable that the foil or film remaining after the formation of the holes is also itself degradable but at a slower rate than the discrete areas. In this way the whole foil or film will be degraded in the course of time and this may be very desirable for environmental reasons so that no residues of non-degraded foil or film will remain in nature. Therefore the foil or film may contain in its entirety an adjusted amount of one or more degradation-promoting agents or it can be degradable as such.

The preparation of the foil or film according to the invention is carried out by methods known as such. Thus, it is well-known to one skilled in the art to provide a plastic foil with thinner areas or holes, to laminate two foils together, to print a printing ink onto a foil and to provide a foil with fine perforations. Therefore, these methods need not be described here in greater detail.

The foil or film materials used consist of such ones as are well-known to one skilled in the art and selected considering such parameters as degradability, handling ability, price etc. The mostly used materials are polyolefins such as polyethylene and copolymers thereof. However, other polymer materials are also useful for the preparation of foils and films according to the invention and the invention is not limited to the use of any specific polymer material. It should be noted that the expression "plastic material" in the present specification and claims must be given a wide meaning and is also intended to comprise foils or films prepared from various biopolymers such as cellulose and its derivatives, for example esters thereof.

The various degradation-promoting agents that can be used can be of widely varying types and a number of them are mentioned in the work by Allen mentioned above. As examples of different types of compounds promoting degradation of polyolefins can be mentioned compounds of transition metals, such as halides, acetyl acetonates, dithiocarbamates, higher fatty acid salts, for example stearates, and oximes of for example nickel, zinc, iron and cobalt, carbonyl compounds such as benzophenone, anthraquinone and their derivatives, polynuclear aromatic compounds such as anthracene, phenanthrene and pyrene, halogenated compounds, paraffins, esters, for example of phosphoric acid, and also other polymers such as polyisobutylene. Certain compounds give a synergistic effect together. This enumeration is not to be considered as complete or restrictive and other compounds which are suitable for polyolefins or other polymers are also known to one skilled in the art.

The degradation-promoting agents can be incorporated in the polymers or printing inks in any way known per se. The amounts suitable for obtaining a controlled degradation can easily be determined by one skilled in the art on the basis or simple routine tests. The agents are usually incorporated in the polymer compound before it is shaped to foils or films, for example by extrusion blowing or extrusion, or they are admixed into the composition for a desired printing ink.

The plastic materials used can also contain other conventional additives such as plasticizers, pigments, dyes, etc. In certain cases such agents may also have an effect on the degradability of the materials.

The invention is illustrated further by the following examples.

Tests were made by applying different ink compositions to a polyolefin film and exposing the film to UV light. In all tests a 30 μm thick film of LD-polyethylene (Statoil L400) of film blowing quality having a low melt index (0.3 g/10 min) was used. The film was corona treated in order to improve the adhesion of the ink.

The UV exposure was carried out by means of an Osram Vitalux lamp at a distance of 24 cm from the film. During the illumination the film was attached over a circular vessel having a diameter of 28 cm and being partly filled with water in order that a condensate should be formed on the underside of the film so as to imitate real conditions when the film is placed over damp soil. During the illumination the temperature of the film surface was measured to be 45°C.

In the tests the ink was applied as discrete areas in the form of spots on the film, a circular surface in the middle having a diameter of 9 cm being left uncoated. The spots were applied to the surface of the film facing away from the light source. The time was determined until the film material in the areas of the spots had been degraded to such an extent that the film burst there at a light touch. This corresponds to the value zero for the tensile strength and the break elongation in these areas.

For inks having the three compositions indicated in the following, the degradation time observed was below 120 hours in all cases.

The three tested printing inks had the composition shown in the following. The preparation of the inks was carried out in a conventional manner.

Ink 1
Ethanol     200 g
Ethyl acetate     40g
n-propanol     50 g
Monopropylene glycol methyl ether     15 g

4

Eruric amide    0.5 g
Polyamide    75 g
Plasticized cellulose nitrate    10 g
Styrene-maleic acid ester    25 g
Oxidized polyethylene wax    17 g
Cobalt(III)acetyl acetonate    150 g
4-chlorobenzophenone    150 g

Ink 2
Ethanol    200 g
Ethyl acetate    40 g
n-propanol    50 g
Monopropylene glycol methyl ether    15 g
Erucic amide    0.5 g
Polyamide    75 g
Plasticized cellulose nitrate    10 g
Styrene-maleic acid ester    25 g
Oxidized polyethylene wax    17 g
Anthraquinone    320 g
Carbon black    2.5 g

Ink 3
Ethanol    200 g
Ethyl acetate    40 g
n-propanol    50 g
Monopropylene glycol methyl ether    15 g
Eruric amide    0.3 g
Polyamide    35 g
Plasticized cellulose nitrate    9 g
Styrene-maleic acid ester    12 g
Oxidized polyethylene wax    15 g
Iron(III)acetyl acetonate    40 g
Benzil dimethylketal    80 g
Carbon black    15 g

For the sake of comparison an illumination test with an untreated film without applied ink was made. The test conditions used were the same as in the preceding tests. The polyethylene film used was also completely identical to that used in the previous tests. The tensile strength and break elongation in the transversal direction was measured after different illumination times, the following results being obtained:

| Illumination, h | 0 | 72 | 142 | 200 | 217 |
|---|---|---|---|---|---|
| Tensile strength, MPa | 30 | 31 | 28 | 15 | 13 |
| Ultimate elongation, % | 452 | 475 | 416 | 244 | 204 |

The results are also shown graphically in the diagram in Fig. 7. It is apparent that after 120 hours, when the film in the areas coated with ink had lost all its strength, the untreated film had maintained a substantially unchanged tensile strength and break elongation and also after almost the double exposure time these values had only been reduced to approximately half the original values. This shows clearly that it is possible to make a plastic film more easily degradable in definite, discrete areas than in the other areas of the film.

Claims

1. Foil or film of a plastic material, especially for use in agriculture or horticulture, which is arranged such that after a determined time, holes are formed in discrete areas of the foil or film, **characterized** in that it has been made more easily degradable through the influence of, for example, light, weather and/or microoganisms in said discrete areas than over the rest of its surface, so that through said influence, holes occur in said discrete areas after a determined time.

2. Foil or film as claimed in claim 1, **characterized** in that it is thinner in discrete areas (2) than over the

5

rest of its surface.

3. Foil or film as claimed in claim 1 or 2, **characterized** in that at least one agent which promotes the degradation of the plastic material is uniformly incorporated in the foil or film.

4. Foil or film as claimed in claim 3, **characterized** in that it is laminated together with a second foil or film (3) which is provided with holes (4) in its areas corresponding to the discrete areas of the first foil or film.

5. Foil or film as claimed in claim 3, **characterized** in that it is provided with a masking color layer (3) which only exposes the foil or film in the discrete areas (4).

6. Foil or film as claimed in claim 1 or 3, **characterized** in that a material (7) which contains at least one agent promoting the degradation of the plastic material is arranged over the discrete areas.

7. Foil or film as claimed in claim 6, **characterized** in that the material (7) is applied on the side of the foil or film (6) that is facing away from incident light (8) in use.

8. Foil or film as claimed in claim 6 or 7, **characterized** in that it is laminated together with a second foil or film containing at least one agent promoting the degradation of the plastic material, the second foil having been made to break up into a pattern of discrete areas(7) by stretching.

9. Foil or film as claimed in claim 1, **characterized** in that it consists of a first foil or film (5) of a plastic material degradable per se which is laminated together with a second foil or film (3) provided with holes (4) in areas corresponding to the discrete areas of the first foil or film.

FIG.1

FIG.2

FIG.3

FIG.4

FIG.5

FIG.6

FIG.7

0298942

o TENSILE STRENGTH
× ULTIMATE ELONGATION

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | GB-A-2 000 077 (IMPERIAL CHEMICAL INDUSTRIES LIMITED) *Page 1, lines 13-28, 67-73, 110-114; claims 1-2,4,9-10* | 1,2,3 | A 01 G 13/02 C 08 J 5/18 |
| Y | US-A-3 828 471 (B.F. ANDERSON) *Column 1, lines 26-32, 46-50; column 4, lines 47-51, 55-57* | 1,3,5 | |
| Y | GB-A-1 052 998 (EASTMAN KODAK COMPANY) *Page 1, lines 13-16, 48-58, 83-85* | 1,3 | |
| Y | CHEMICAL ABSTRACTS, vol. 102, no. 221782h,1985, NIKOLOVA,Z. et al: "Photodegradation of polyethylene film materials and possibilities for their use in agriculture", & GOD.VISSH.KHIM.-TECHNOL.INST., SOFIA 1983, 29(2), 243-8 *Abstract* | 1,2,3 | TECHNICAL FIELDS SEARCHED (Int. Cl.4) A 01 G C 08 J C 08 L |
| A | CHEMICAL ABSTRACTS, vol. 102, no. 79882v, 1985, BORODULINA, M.Z. et al: "Photodegradable polyethylene film for agriculture", & PLAST MASSY 1984, (12), 37-8 *Abstract* | 1 | |

The present search report has been drawn up for all claims

| Place of search | Date of completion of the search | Examiner |
|---|---|---|
| STOCKHOLM | 07-10-1988 | ÖSTERMAN WALLIN A.E.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 93, no. 73124y, 1980, BORODULINA, M.Z. et al: "Photodestructible poly-ethylene films and their experi-mental use", & PLENOCHN. POLIM. MATER.IKH. PRIMEN., MATER.KRATKOS-ROCHNOGO SEMIN.1977, 43-4 *Abstract* | 1-3 | A 01 G 13/02<br>C 08 J 5/18 |

TECHNICAL FIELDS
SEARCHED (Int. Cl.4)

A 01 G

C 08 J

C 08 L